# EUROPEAN PATENT APPLICATION

(11) **EP 1 661 736 A2**
(43) Date of publication of application: **31.05.2006**
(21) Application number: 05003885.0
(22) Date of filing: 23.02.2005
(51) Int. Cl.: B60C 23/04

(54) **Valve device**

(30) Priority: 30.11.2004 JP 2004347485
(71) Applicant: Pacific Industrial Co., Ltd., Ogaki-shi, Gifu-ken 503-8603 (JP)
(72) Inventor: Okubo, Youichi, Ogaki-shi Gifu-ken, 503-8603 (JP); Katou, Michiya, Ogaki-shi Gifu-ken, 503-8603 (JP)
(74) Representative: Reinhard - Skuhra - Weise & Partner

(57) **Abstract**

A valve device attachable to a wheel including a tire in a state where the valve device penetrates through an opening of the wheel. The valve device includes a transmitter unit for detecting a condition of the tire and generating a transmission signal indicating the detected condition of the tire, a valve stem extending from the transmitter unit and an elastic member disposed to surround the valve stem. The elastic member has an annular attaching portion having a diameter greater than the diameter of the opening. The valve stem is attached to the wheel by passing the attaching portion through the opening by compressively deforming the attaching portion. The attaching portion includes a recessed portion for facilitating compressively deforming the attaching portion.

## Description

The present invention relates to a valve attachable to a wheel of a vehicle, and more particularly, to a valve functioning as a transmitter for a tire condition monitoring system.

A wireless type tire condition monitoring system has been proposed for monitoring from the passenger compartment, the condition of a tire attached to a vehicle. The system includes a transmitter installed in the interior of the tire and a receiver. The transmitter detects the condition of the tire such as the pneumatic pressure and temperature within the tire. The transmitter transmits information regarding the tire condition to the receiver and the receiver displays the information on a display provided in the passenger compartment, when necessary.

Fig. 11 shows a transmitter described in U.S. Patent No. 6,005,480. The transmitter is configured as a snap-in valve device including a transmitter unit 112 and a valve unit 100 connected to the transmitter unit 112. The valve unit 100 includes a stem 116 connected to the transmitter unit 112, a valve body 117 incorporated in the stem 116 for supplying air to the interior of the tire, and an elastic member 111 encompassing the stem 116. The transmitter unit 112 is received in the interior of the tire, which is defined by the tire (not shown) and a vehicle wheel 115. For attaching the valve unit 100 to the wheel 115, the valve unit 100 is inserted into an opening 115a defined in the wheel 115. The valve unit 100 is then pressed toward the exterior of the wheel 115 until an annular engaging portion 111a of the elastic member 111 is fully exposed from the opening 111a. Since the annular engaging portion 111a has a diameter larger than that of the opening 115a, the engaging portion 111a is deformed in a compressed manner while it is passed through the opening 115a. The engaging portion 111a is released from pressing force when fully released from the opening 115a, such that the engaging portion 111a is enlarged radially outward. The valve unit 100 is thus prevented from falling from the opening 115a.

For stabilizing the connection between the transmitter unit 112 and the valve unit 100, the stem 116 extending through the valve unit 100 must be formed of hard material such as metal. The transmitter unit 112 is thus secured to the stem 116, which is relatively hard. However, if the stem 116 is formed of the hard material, compressive deformation of the elastic member 111 encompassing the stem 116 is hampered. It is thus necessary to increase the force for pressing the annular engaging portion 111a into the opening 115a for deforming the engaging portion 111a radially inward as compressed. This makes it difficult to attach the valve unit 100 to the wheel 115.

According to the aforementioned patent, a space 120 is defined between the transmitter 112 and the elastic member 111 for facilitating the compressive deformation of the elastic member 111. When the valve unit 110 is inserted into the opening 115a of the wheel 115, a portion of the elastic member 111 is deformed and thus received in the space 120. However, the space 120 is relatively spaced from the annular engaging portion 111 that is deformed in a compressed manner when passing through the opening 115a. Accordingly, the attachment of the valve unit 100 to the wheel 115 still requires relatively great force.

The elastic member 111 is formed of rubber and thus deteriorates relatively quickly. However, since the elastic member 111 of the aforementioned device is fixed to the stem 116 in an inseparable manner, at least the entire portion of the valve unit 100 must be replaced when the elastic member 111 is deteriorated, and the cost for replacement is increased.

Accordingly, it is an objective of the present invention to provide a snap-in valve device that is easily attached to a wheel of a vehicle. Another objective of the present invention is to provide a cost-saving snap-in valve device.

To achieve the foregoing and other objectives and in accordance with the purposes of the present invention, the invention provides a valve device attachable to a wheel including a tire in a state where the valve device penetrates through an opening of the wheel. The valve device comprises a transmitter unit for detecting a condition of the tire and generating a transmission signal which indicates the detected condition of the tire, a valve stem extending from the transmitter unit and an elastic member disposed to surround the valve stem. The elastic member has an annular attaching portion that has a diameter greater than the diameter of the opening. The valve stem is attached to the wheel in a state where the attaching portion is attached to a portion of the wheel around the opening by passing the attaching portion through the opening by compressibly deforming the attaching portion. The attaching portion includes a recessed portion for facilitating compressibly deforming the attaching portion.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a side view showing a snap-in valve device according to an embodiment of the present invention;
Fig. 2 is a cross-sectional view showing the device of Fig. 1;
Fig. 3 is an enlarged, cross-sectional view showing a portion of Fig. 2;
Fig. 4(a) is a partially broken bottom view showing the snap-in valve device of Fig. 1;
Fig. 4(b) is a plan view showing the device of Fig. 1;
Fig. 5 is a side view showing the device of Fig. 1 with an elastic member separated from the device;
Fig. 6(a) is a cross-sectional view taken along line 6a-6a of Fig. 5;
Fig. 6(b) is a cross-sectional view showing a modification of grooves in the elastic member of Fig. 6(a);
Fig. 7 is a side view showing a snap-in valve device including an elastic member according to another embodiment of the present invention;
Fig. 8 is a cross-sectional view showing the device of Fig. 1 with a transmitter module removed from the device;
Fig. 9 is a rear view showing the device of Fig. 1 with the transmitter module 1 attached to the device;
Fig. 10 is an enlarged perspective view showing an engagement structure between the transmitter module and a casing; and

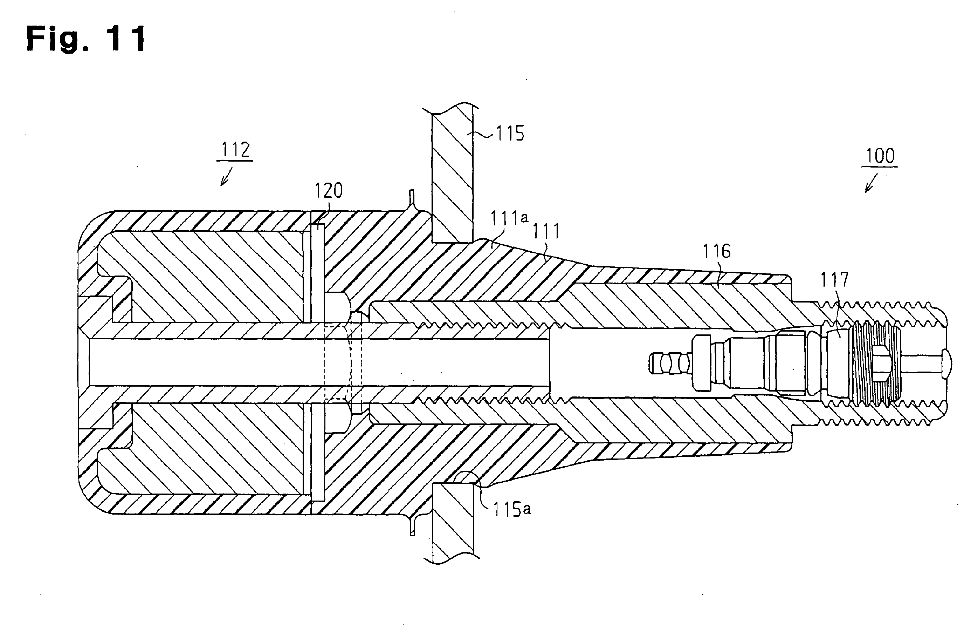

Fig. 11 is a cross-sectional view showing a prior art snap-in valve device.

An embodiment of the present invention will now be described.

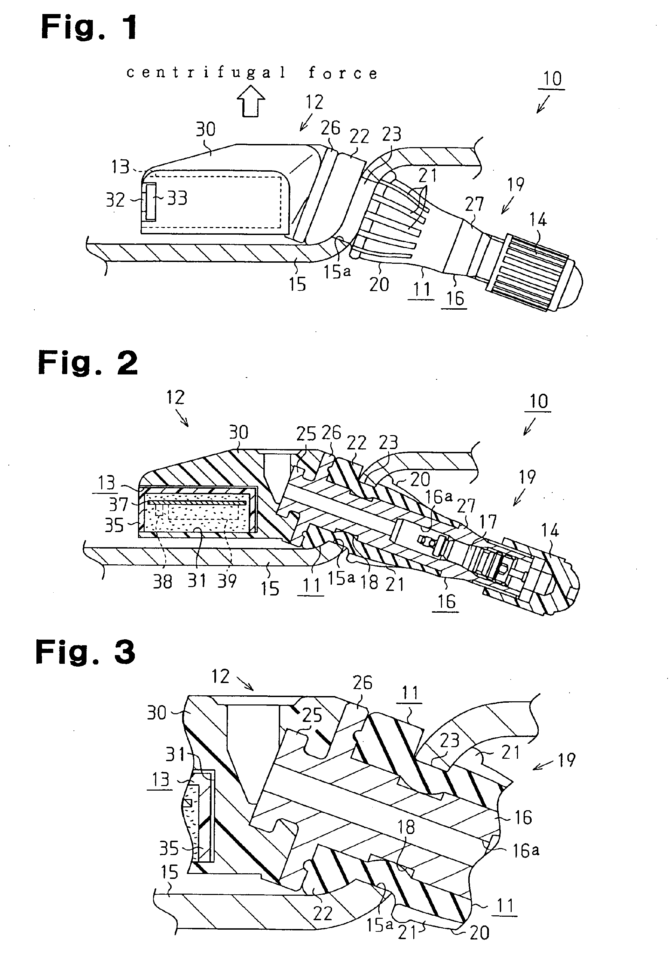

Fig. 1 shows a snap-in valve device 10 in a state attached to a wheel 15 of a vehicle. Fig. 2 is a cross-sectional view showing the snap-in valve device 10. The snap-in valve device 10 includes a valve unit 19 and a transmitter unit 12.

The valve unit 19 has a hollow cylindrical valve stem 16 extending from the transmitter unit 12. A valve body 17 is incorporated in a distal end of the valve stem 16 such that the valve body 17 is accommodated in an air introduction hole 16a of the valve stem 16. Through the valve body 17 and the air introduction hole 16a, air is supplied to the interior of a tire (not shown) attached to the wheel 15. The distal end of the valve stem 16 is covered and protected by a cap 14. The valve stem 16 configures the main structure for the valve unit 19 and is formed of relatively hard material such as metal. A hollow and cylindrical elastic member 11 encompasses the valve stem 16. The elastic member 11 is formed of an elastically deformable material, preferably, rubber. The elastic member 11 is fitted into an opening 15a defined in the wheel 15 as deformed in a compressed manner, such that the valve unit 19 is secured to the wheel 15.

The transmitter unit 12 includes a resin casing 30 connected to the valve stem 16 and a transmitter module 13 received in the casing 30 in a removable manner. Since the snap-in valve device 10 must be secured to the wheel 15 stably, the transmitter unit 12 must be connected securely to the valve unit 19, which is directly engaged with the wheel 15. It is therefore desirable that the valve stem 16 be of hard material, or that the main structure of the valve unit be formed integrally with the resin casing 30 of the transmitter unit 12. In this case, it is preferable that the casing 30 be molded with the proximal end of the valve stem 16 placed in a mold, through so-called insert molding. A connecting flange 25 is formed at the proximal end of the valve stem 16. The connecting flange 25 is embedded in the casing 30 and thus improves the connection strength between the valve stem 16 and the casing 30. However, as long as the transmitter unit 12 is connected securely to the valve unit 19, the transmitter unit 12 and the valve unit 19 may be fabricated separately. The transmitter unit 12 and the valve unit 19 are then connected to each other in a separable or inseparable manner.

With reference to Figs. 1 to 4(b), the elastic member 11 includes a base 22, a groove-like annular attaching portion 23, and an annular engaging portion 20, which are arranged in this order from the proximal end to the distal end of the elastic member 11. As illustrated in Figs. 1 and 2, the snap-in valve device 10 is attached to the wheel 15 in a state in which the attaching portion 23 is fitted into the opening 15a and an area of the wheel 15 around the opening 15a is supported by the base 22 and the engaging portion 20. In a state where the snap-in valve device 10 is separated from the wheel 15, the diameter of the attaching portion 23 is larger than that of the opening 15a. Therefore, with the snap-in valve device 10 attached to the wheel 15, the attaching portion 23 receives pressing force acting radially inward from the inner circumferential wall of the opening 15a.

The annular engaging portion 20 is shaped in a tapered manner toward the distal end of the elastic member 11. The maximum diameter of the engaging portion 20 (the outer diameter of the section of the engaging portion 20 adjacent to the annular attaching portion 23) is larger than the diameter of the opening 15a. For attaching the snap-in valve device 10 to the wheel 15, the valve unit 19 is inserted into the opening 15a from the distal end of the valve unit 19. The valve unit 19 is then pressed toward the exterior of the wheel 15 until the annular engaging portion 20 is fully exposed from the opening 15a. When passing through the opening 15a, the annular engaging portion 20 is pressed by the inner circumferential wall of the opening 15a and thus deformed radially inward in a compressed manner. When the engaging portion 20 is fully exposed from the opening 15a, the engaging portion 20 is released from the pressing force of the inner circumferential wall of the opening 15a. The engaging portion 20 is thus enlarged radially outward, such that the engaging portion 20 is engaged with the portion of the wheel 15 corresponding to the opening 15a. Accordingly, the valve unit 19 is prevented from falling from the opening 15a.

For securely engaging the valve unit 19 with the opening 15a, it is preferred that the diameter of the annular engaging portion 20 (particularly, the diameter of the section of the engaging portion 20 adjacent to the attaching portion 23) be enlarged to the possible maximum margin with respect to that of the opening 15a. However, if the diameter of the engaging portion 20 is excessively large as compared to that of the opening 15a, the compressive deformation of the engaging portion 20, which allows the engaging portion 20 to pass through the opening 15a, is hampered when the snap-in valve device 10 is attached to the wheel 15. Also, since the valve stem 16 located radially inward from the elastic member 11 has relatively high rigidity, the valve stem 16 hampers the compressive deformation of the annular engaging portion 20.

Accordingly, in the illustrated embodiment, for facilitating the compressive deformation of the annular engaging portion 20, a plurality of recessed portions, or grooves 21, are defined in the surface of the engaging portion 20. The grooves 21 extend along the axis of the elastic member 11 as spaced at equal angular intervals about the axis of the elastic member 11. If compressive force is applied to the annular engaging portion 20 in a radial inward direction, the annular engaging portion 20 is deformed such that the deformed portion is received by the spaces defined by the grooves 21. This facilitates the compressive deformation of the engaging portion 20, as compared to the case in which the grooves 21 are not provided. It is thus easy to pass the annular engaging portion 20 through the opening 15a.

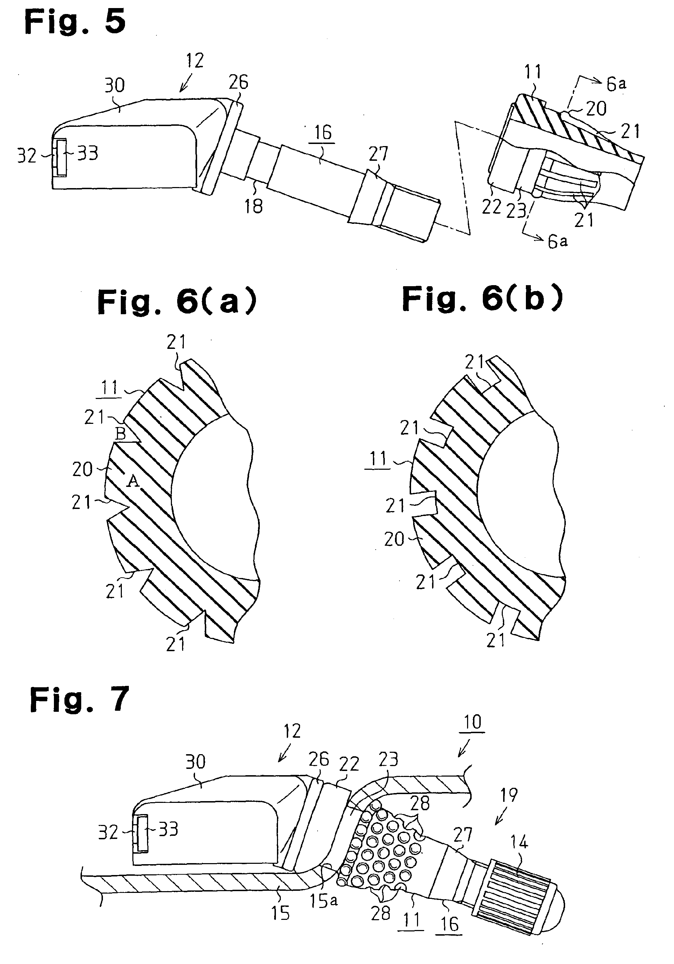

In the illustrated embodiment, as shown in Fig. 6(a), each of the grooves 21 has a V-shaped cross section. In terms of cross sections extending perpendicular to the axis of the elastic member 11, the proportion of the total cross-sectional area of the grooves 21 to the cross-sectional area of the solid portion of the elastic member 11 corresponding to the engaging portion 20 is preferably not less than 5 percent but not more than 15 percent. In other words, if the cross-sectional area of the solid portion of the elastic member 11 corresponding to the engaging portion 20 is indicated as A, the cross-sectional area of each groove 21 is indicated as B, and the number of the grooves 21 is indicated as n, it is desired that the proportion represented by the equation (B x n)/A x 100, is not less than 5 percent but not more than 15 percent. If such proportion is less than 5 percent, passing of the annular engaging portion 20 through the opening 15a is not sufficiently facilitated. In contrast, if the proportion exceeds 15 percent, the rigidity of the engaging portion 20 becomes excessively low. In this case, the elastic member 11 is easily separated from the opening 15a. That is, the aforementioned range of proportion, 5 to 15 percent, is preferred for easily fitting the valve unit 19 into the opening 15a and then preventing the valve unit 19 from the opening 15a.

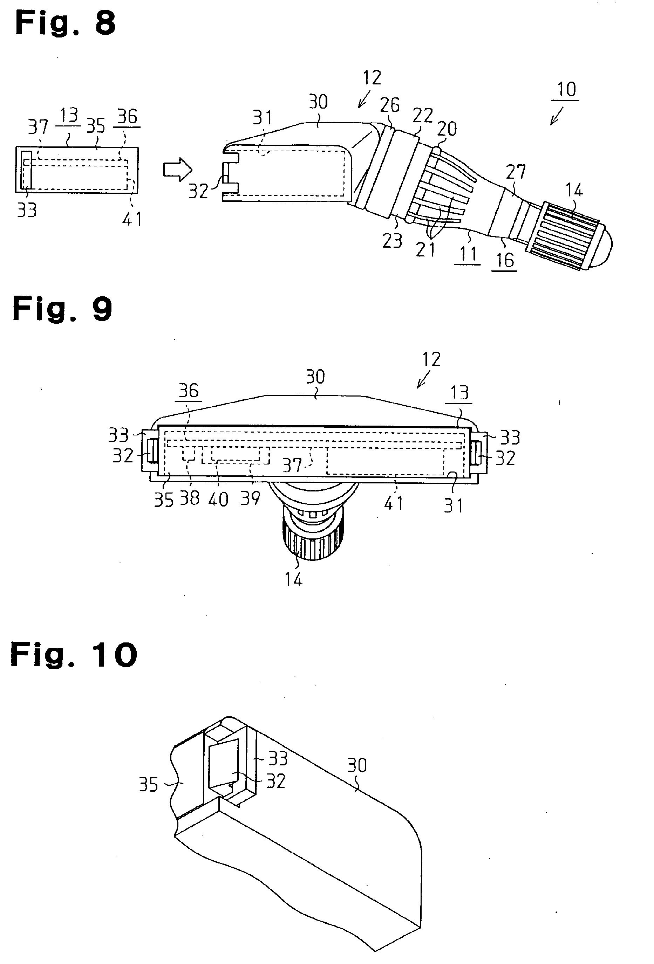

The recessed portions for facilitating the compressive deformation of the engaging portion 20 are not restricted to the grooves 21. The recessed portions may be shaped and arranged in any other suitable manner, as long as the solid portion of the annular engaging portion 20 is reduced. For example, the cross-sectional shape of each groove 21 may be rectangular, as shown in Fig. 6(b), rather than the V-shape. Alternatively, each groove 21 may have a U-shaped cross section. Further, the dimensions (the axial dimension, the lateral dimension, and the depth) of each groove 21, the extending direction of the groove 21, and the number of the grooves 21 may be modified as needed. In addition, as shown in Fig. 7, a plurality of recesses 28 each having an arched cross-sectional shape may be defined in the surface of the annular engaging portion 20, instead of the grooves 21.

In the illustrated embodiment, the elastic member 11 is attached to the valve stem 16 in a separable manner, referring to Fig. 5. Although the elastic member 11 is exposed to the external environment, the elastic member 11 is formed of a material that is relatively easily deteriorated, such as rubber. The life of the elastic member 11 is thus relatively short, as compared to the remaining components of the snap-in valve device 10. If the elastic member 11 is inseparable from the valve stem 16, the snap-in valve device 10 as a whole must be replaced every time the elastic member 11 becomes unusable. This increases replacement cost for the snap-in valve device 10. However, if the elastic member 11 is attached to the valve stem 16 in a separable manner, as in the illustrated embodiment, the elastic member 11 is replaceable independently from the remainder of the device 10. The cost for the snap-in valve device 10 is thus saved.

As shown in Figs. 1 to 5, the valve stem 16 includes a first holding flange 26 with a relatively large diameter and a second holding flange 27 with a relatively small diameter. The first holding flange 26 is formed near the proximal end of the valve stem 16. The second holding flange 27 is spaced from the first holding flange 26 in the axial direction of the valve stem 16 toward the distal end of the valve stem 16. The second holding flange 27 is shaped in a tapered manner toward the distal end of the valve stem 16. The maximum outer diameter of the second holding flange 27 is larger than the inner diameter of the elastic member 11. The elastic member 11 is held by the first and second holding flanges 26, 27 with respect to the axial direction of the elastic member 11.

For attaching the elastic member 11 to the valve stem 16, the valve stem 16, with the cap 14 removed from the valve stem 16, is inserted into the elastic member 11 from the distal end of the valve stem 16. When reaching a position beyond the second holding flange 27, the elastic member 11 is held between the first holding flange 26 and the second holding flange 27. The tapered shape of the second holding flange 27 makes it easy for the elastic member 11 to proceed along and beyond the second holding flange 27.

As shown in Fig. 3, the valve stem 16 includes an annular recess 18 defined in a portion between the first and second holding flanges 26, 27, or a portion of the valve stem 16 to which the elastic member 11 is attached. The annular recess 18 corresponds to a potion of the valve stem 16 between the first and second holding flanges 26, 27 having a reduced diameter, as compared to the remainder of the valve stem 16. The annular recess 18 is located at an axial position corresponding to the opening 15a with the valve stem 16 attached to the wheel 15. The annular recess 18 is located at a position offset from the annular engaging portion 20 with respect to the axial direction of the elastic member 11.

When the engaging portion 20 is passed through the opening 15a for attaching the valve stem 16 to the wheel 15, a portion of the elastic member 11 is deformed such that the portion is received in the space defined by the annular recess 18. This further facilitates the attachment of the snap-in valve device 10 to the wheel 15.

As has been described, the annular attaching portion 23, which diameter is larger than that of the opening 15a, is pressed by the inner circumferential wall of the opening 15a with the snap-in valve device 10 attached to the wheel 15. In this state, a portion of the elastic member 11 is deformed and thus received by the space defined by the annular recess 18, as shown in Fig. 3, such that the deformed portion is engaged with the annular recess 18. Therefore, regardless of that the elastic member 11 is separable from the valve stem 16, the elastic member 11 is fixed to the valve stem 16 securely and stably, while restricted from axial movement with respect to the valve stem 16.

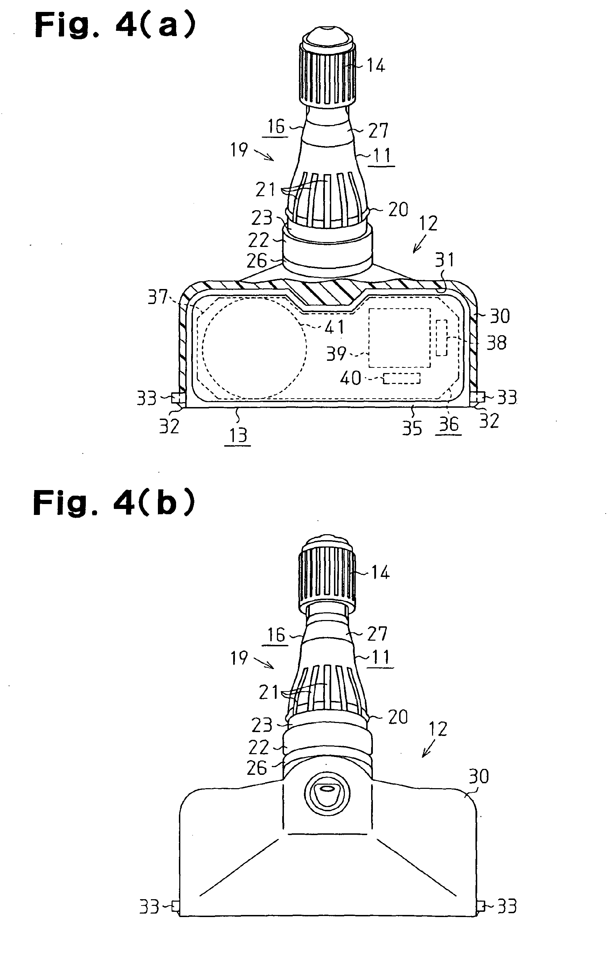

In the illustrated embodiment, the snap-in valve device 10 is configured such that the transmitter module 13 is separable from the casing 20, as illustrated in Fig. 8. Referring to Figs. 4(a), 8 and 9, the transmitter module 13 includes a resin case 35 having a square box-like shape and a circuit unit 36, which is accommodated in the case 35. The circuit unit 36 includes a circuit board 37 and a plurality of electronic elements formed on the circuit board 37, a controller 38, a pressure sensor 39, and a transmission circuit 40, each of which is formed as a chip. Also, a battery 41 is provided on the circuit board 37 for supplying power to the electronic elements on the circuit board 37.

The pressure sensor 39, serving as a tire condition sensor, detects the pneumatic pressure in the interior of the tire and provides the controller 38 with pneumatic pressure data obtained from the detection. The controller 38 sends data including the pneumatic pressure data to the transmission circuit 40. The transmission circuit 40 generates a transmission signal from the received data and transmits the signal wirelessly through a transmission antenna (not shown).

The resin case 35 is filled with potting material such that the circuit unit 36 in the case 35 is covered by the potting material except for a pressure sensing surface of the pressure sensor 39. In the illustrated embodiment, the resin case 35 has a downward opening. The potting material is thus filled in the case 35 with the circuit unit 36 accommodated in the case 35 from the downward opening of the case 35.

An engagement mechanism is deployed between the casing 30 and the transmitter module 13 for engaging the casing 30 and the transmitter module 13 with each other in a separable manner. In other words, with reference to Figs. 8 to 10, the casing 30 has an accommodating portion 31 having an opening facing the opposite direction with respect to the valve unit 19. The transmitter module 13 is selectively inserted into or removed from the opening of the accommodating portion 31. At opposing sides of the casing 30 near the opening of the accommodating portion 31, a pair of engaging pieces 32 are formed. Correspondingly, a pair of receiving members 33 each having a square flame-like shape are formed at opposed sides of the resin case 35 of the transmitter module 13.

For installing the transmitter module 13 in the casing 30, the transmitter module 13 is inserted into the accommodating portion 31 of the casing 30, such that each of the engaging pieces 32 is passed through the corresponding one of the receiving members 33. At this stage, each engaging piece 32 is elastically deformed in an inward direction by the corresponding receiving member 33. When the transmitter module 13 is fully received in the accommodating portion 31, each engaging piece 32 restores the original shape and is thus engaged with the corresponding receiving member 33. In contrast, for separating the transmitter module 13 from the casing 30, each of the engaging pieces 32 is elastically deformed in the inward direction such that the engaging piece 32 is released from the engagement with the corresponding receiving member 33. The transmitter module 13 is then removed from the accommodating portion 31.

The engagement mechanism between the casing 30 and the transmitter module 13 is not restricted to the illustrated structure but may be modified as needed.

When the battery 41 is completely drained or a certain electronic element of the circuit board 37 has failed, only the transmitter module 13 must be separated from the snap-in valve device 10 for replacement. That is, the remaining portion of the snap-in valve device 10, other than the transmitter module 13, may be continuously used without replacement. This structure saves replacement costs.

Further, replacement of the transmitter module 13 may be accomplished with the snap-in valve device 10 maintained as attached to the wheel 15. This simplifies such replacement.

As shown in Fig. 1, with the snap-in valve device 10 attached to the wheel 15, the opening of the accommodating portion 31 of the casing 30 is oriented parallel with the rotational axis of the wheel 15. This structure reduces the force acting parallel with the rotational axis of the wheel 15 when the vehicle is moving. The transmitter module 13 is thus prevented from falling from the casing 30. Even if the snap-in valve 10 is subjected to centrifugal force produced by rotation of the wheel 15, the transmitter module 13 is supported by an upper wall of the casing 30. Further, even if the snap-in valve device 10 is subjected to force produced in the rotational direction of the wheel 15, the transmitter module 13 is supported by opposing side walls of the casing 30. Accordingly, in the illustrated embodiment, in which the transmitter module 13 is removable from the snap-in valve device 10, the parallel orientation of the opening of the accommodating portion 31 with the rotational axis of the wheel 15 is effective in preventing the transmitter module 13 from falling therefrom.

The present examples and embodiments are to be considered as illustrative and not restrictive and the invention is not to be limited to the details given herein, but may be modified within the scope and equivalence of the appended claims.

## Claims

1. A valve device for snap-attachment to a wheel including an opening and a tire, the valve device comprising a transmitter unit for detecting a condition of the tire and generating a transmission signal which indicates the detected condition of the tire, a valve stem extending from the transmitter unit, and an elastic member disposed to surround the valve stem, the elastic member including an annular attaching portion having a diameter greater than the diameter of the opening, **characterized by** the valve stem (16) being attachable to the wheel (15) with the attaching portion (20) attached to a portion of the wheel (15) around the opening (15a) by compressively deforming the attaching portion (20) and passing it through the opening (15a) and the attaching portion (20) including a recessed portion (21) for facilitating compressive deformation of the attaching portion (20).

2. The valve device according to claim 1 **characterized in that** in a cross section perpendicular to an axis of the elastic member (11), the proportion of the area of said recessed portion (21) with respect to the area of a solid portion of the elastic member that is associated with the attaching portion (20) is no less than 5% and no more than 15%.

3. The valve device according to claim 1 or 2 **characterized by** the recessed portion (21) being a groove extending along the axis of the elastic member (11) over the attaching portion (20).

4. The valve device according to claim 3 **characterized by** the groove being one of a plurality of grooves (21) arranged around the axis of the elastic member (11).

5. The valve device according to claim 4 **characterized in that** in a cross section perpendicular to an axis of the elastic member (11), the proportion of the area of total grooves (21) with respect to the area of a solid portion of the elastic member (11) that is associated with the attaching portion (20) is no less than 5% and no more than 15%.

6. The valve device according to any one of claims 1 to 5 **characterized by** the recessed portion (21) comprising a plurality of recesses formed over the attaching portion (20).

7. The valve device according to any one of claims 1 to 6 **characterized by** the elastic member (11) being removable from the valve stem (16).

8. The valve device according to any one of claims 1 to 7 **characterized by** the valve stem (16) including a proximal end connected to the transmitter unit and a distal end opposite to the proximal end, the valve stem (16) including a first supporting flange (25) disposed in the vicinity of the proximal end and a second supporting flange (26) separated in the axial direction from the first supporting flange (25) toward the distal end, and the elastic member (11) including an axial direction being held by the supporting flanges (25, 26) with respect to the axial direction.

9. The valve device according to any one of claims 1 to 8 **characterized by** the valve stem (16) including an annular recessed portion (18) at an axial direction position corresponding to the opening (15a) and, in a state where the valve stem (16) attached to the wheel (15), the annular recessed portion (18) receiving a portion of the elastic member (16).

10. The valve device according to claim 9 **characterized by** the annular recessed portion (18) being displaced from the attaching portion (20) with respect to the axial direction of the elastic member (11).

11. The valve device according to any one of claims 1 to 10 **characterized by** the transmitter (12) unit comprising a casing (30) connected to the valve stem (16) and a transmitter module (13) detachable from the casing (30), wherein the transmitter module (13) includes an electronic component (39) and a battery (41) for supplying electricity to the electronic component (39).

12. The valve device according to claim 11 **characterized by** an attaching mechanism (33) being disposed between the casing (30) and the transmitter module (13) for removably attaching the casing (30) and the transmitter module (13).

13. The valve device according to claim 11 or 12 **characterized by** the casing (30) including an accommodating portion (31) for accommodating the transmitter module (13) and the accommodating portion (31) opening in a direction parallel to the axis of revolution of the wheel (15).

14. A valve for snap-attachment to a wheel including an opening and a tire, the valve device comprising a transmitter unit for detecting a condition of the tire and generating a transmission signal which indicates the detected condition of the tire, a valve stem extending from the transmitter unit, an elastic member disposed to surround the valve stem **characterized by** the valve stem (16) being attached to the wheel (15) by engaging the elastic member (11) with the opening (15a) and wherein the elastic member (11) is removable with respect to the valve stem (16).

15. The valve device according to claim 14 **characterized by** the valve stem (16) including a proximal end connected to the transmitter unit (13) and a distal end opposite to the proximal end, said the valve stem (16) including a first supporting flange (25) disposed in the vicinity of the proximal end and a second supporting flange (26) separated in an axial direction from the first supporting flange (25) toward the distal end and said elastic member (11) being held by the supporting flanges (25, 26) with respect to the axial direction.

16. The valve device according to claim 14 or 15 **characterized by** the valve stem (16) including an annular recessed portion (18) at an axial direction position corresponding to the opening (15a), and in a state where the valve stem (16) being attached to the wheel(15), the annular recessed portion (18) receiving a portion of the elastic member (11).

17. A valve for snap-attachment to a wheel including an opening and a tire, the valve comprising a transmitter unit comprising a casing and a transmitter module detachable with respect to the casing, the transmitter module including an electronic component for detecting a condition of the tire and generating a transmission signal indicating the detected tire condition and a battery for supplying electricity to the electronic component **characterized by** a valve stem (16) extending from the casing (30) and an elastic member (11) disposed to surround the valve stem (16), the valve stem (16) being attachable to the wheel (15) by engaging the elastic member (11) with the opening (15a).

18. The valve according to claim 17 **characterized by** an attaching mechanism (33) being disposed between the casing (30) and the transmitter module (13) for removably attaching the casing (30) and the transmitter (13).

19. The valve according to claim 17 or 18 **characterized by** the casing (30) including an accommodating portion (31) for accommodating the transmitter module (13) and the accommodating portion (31) opening in a direction parallel to the axis of the revolution of the wheel (15).
